Europäisches Patentamt

European Patent Office

Office européen des brevets

(19)

(11) Veröffentlichungsnummer: **0 220 377**

A2

(12)

# EUROPÄISCHE PATENTANMELDUNG

(21) Anmeldenummer: 86108804.5

(22) Anmeldetag: 27.06.86

(51) Int. Cl.4 **B65C 1/02** , B65C 9/14 , B65C 9/22 , B41F 17/00

(30) Priorität: 30.10.85 DE 3538528

(43) Veröffentlichungstag der Anmeldung:
06.05.87 Patentblatt 87/19

(84) Benannte Vertragsstaaten:
BE DE FR GB IT LU NL SE

(71) Anmelder: SENDVAC M. Knape GmbH & Co.
Maschinen und Anlagen KG
Hubertusstr. 55
D-4350 Recklinghausen(DE)

(72) Erfinder: Knape, Michael
Stettiner Strasse 2a
D-4370 Marl(DE)

(74) Vertreter: Herrmann-Trentepohl, Werner,
Dipl.-Ing. et al
Schaeferstrasse 18
D-4690 Herne 1(DE)

(54) Verfahren und Vorrichtung zur Herstellung von etikettierten Kunststoffformlingen.

(57) Bei einem Verfahren zur Herstellung von etikettierten und/oder bedruckten Kunststofformlingen, z.B. von Kunststoffschalen aus einer Kunststoffolienbahn, wobei die Formlinge taktweise aus der aufgeheizten Kunststoffolie zu mehreren gleichzeitig in einer Matte während eines Taktes ausgeformt, die Matten während wenigstens eines Zwischentaktes abgekühlt und die Formlinge in weiteren anschließenden Takten aus der Matte gewonnen werden, ist erfindungsgemäß vorgesehen, daß während des oder der Zwischentakte die Formlinge mit den Etiketten versehen und/oder mittels eines Verfahrens zum Bedrucken von gekrümmten Flächen bedruckt werden.

FIG. 1

EP 0 220 377 A2

Die Erfindung betrifft ein Verfahren und eine Vorrichtung zur Herstellung von etikettierten und/oder bedruckten Kunststofformlingen gemäß dem Oberbegriff des Anspruchs 1.

Die nach dem erfindungsgemäßen Verfahren hergestellten Kunststofformlinge tragen ein Schildchen bzw. eine Einlage, welche in der Regel aufgrund ihres Werkstoffes besondere Zwecke erfüllt und daher nicht unbedingt mit einer Aufschrift versehen zu sein braucht. Nach dem neuen Verfahren werden hautpsächlich Kunststoffschalen hergestellt, in denen feste Lebensmittel verpackt werden, die in der Schale beispielsweise mit einer Schrumpffolie festgehalten werden, welche um die Schale des Verpackungsgutes gelegt ist. Derartige Kunststoffschalen werden häufig mit einer Kombination von Zellulose/Pergamentausschnitten etikettiert. Die Zelluloseausschnitte besitzen hygroskopische Eigenschaften. Dadurch wird z.B. Saft oder Blut von verpacktem Fleisch aufgesaugt, wodurch das Erscheinungsbild der Ware wesentlich verbessert wird. In diesem Fall besteht ein solcher Papierausschnitt aus mehreren Lagen und ist auf der Warenseite eben, auf der gegenüberliegenden Klebseite jedoch meistens mit Erhebungen oder Vertiefungen versehen, die u.a. den Saugeffekt erhöhen. Die Pergamentschicht erleichtert die Ablösung der Ware bei der Entnahme aus der Kunststoffschale und hinterläßt keine Reste auf der Ware.

Neben oder statt der Etikettierung können mit dem erfindungemäßen Verfahren die Kunststofformlinge, z.B. die Kunststoffschalen, auf ihrer Außenseite bedruckt werden. Es kann sich dabei um Werbeaufdrucke oder um Informationsdaten handeln.

Die Herstellung der Kunststofformlinge nach dem erfindungsgemäßen Verfahren erfolgt in einer Fertigungslinie und in der Regel aus einer geschäumten Folie oder einem sogenannten EPS Material, sowie im allgemeinen in einer Bahn, welche von einem Wickel abgezogen wird. In einer solchen Fertigungslinie werden die einzelnen Verfahrensschritte von mehreren Maschinen-Baugruppen ausgeführt, welche taktweise zusammenarbeiten und mehrere auf eine Teillänge der Bahn, d.h. auf sogenannten Matten zusammengefaßte Formlinge gleichzeitig herstellen bzw. bearbeiten. Im einzelnen kann das mit Hilfe einer dem beschriebenen Folienwickel nachgeschalteten Beheizungseinrichtung erfolgen, welche eine Mattenfläche auf der Folienbahn erwärmt, die im folgenden Takt in eine Verformungseinrichtung gelangt, in der Formschalen, Becher o.dgl. ausgeformt werden, in der Matte jedoch noch zusammenhängen. Der darauffolgende Zwischentakt bzw. die darauffolgenden Zwischentakte tragen dem Umstand Rechnung, daß die Formlinge nach dem Verfahren beim Erkalten der Matte Formänderungen erfahren, die zwar relativ gering sind, die aber eine Bearbeitung der Formlinge im Zwischentakt ausschließen. An den Zwischentakt schließt sich das Ausstanzen der Formlinge aus der Matte an, was in einer Stanze ausgeführt wird. Diese kann eine Mehrzahl von Formlingen gleichzeitig ausstanzen. Die hierdurch vereinzelten Formlinge werden gezählt, gestapelt und versandfertig abgesackt.

Kennzeichnend für derartige Fertigungslinien sind außerordentlich hohe Bearbeitungsgeschwindigkeiten und entsprechend große Stückzahlen verhältnismäßig kleiner und leichter Formteile, welche aus den Matten mit verhältnismäßig geringem Verschnitt entstehend. Gleichwohl sind die an die Qualität der etikettierten bzw. bedruckten Formlinge von den Verwendern gestellten Anforderungen extrem hoch, was sich bei der Verpackung von Lebensmitteln u.a. aus der verkaufsfördernden Wirkung einwandfrei etikettierter bzw. bedruckter Schalen oder Becher ergibt.

Im wesentlichen geht es bei dem Etikettieren darum, das eingangs erwähnte Schildchen bzw. eine Papiereinlage in richtiger Lage und Stellung z.B. auf dem Boden einer Kunststoffschale durch Verkleben zu befestigen. Bislang hat sich allerdings ergeben, daß das Etikettieren an den fertigen, d.h. den vereinzelten Formlingen von Hand durchgeführt werden muß, weil die bisher hierfür vorgesehenen Maschinen, welche die ausgestanzten Formlinge in Stapelschächten aufnehmen, vereinzeln, etikettieren und schließlich wieder stapeln, unzureichende Qualitäten liefern und im Hinblick darauf zu aufwendig sind. Bei der Handarbeit werden ausreichend Qualitäten erzielt. Jedoch geht man auch hierbei von den ausgestanzten, d.h. vereinzelten Formlingen aus, welche von den verpackten bzw. abgesackten Einheiten kommen. Die meistens von weiblichen Hilfskräften durchgeführte Etikettierung setzt das Auspacken und Entstapeln der Formlinge voraus, bevor der Klebstoffauftrag angebracht und das Etikett mit der richtigen Seite aufgedrückt werden kann. Die auf diese Weise etikettierten Formlinge werden erneut gestapelt und wieder eingepackt, bevor sie vom Verwender endgültig benutzt werden.

Die Etikettierleistung, welche auf diese Weise erreichbar ist, liegt im Verhältnis zu den hohen Produktionsgeschwindigkeiten, mit denen die Formlinge hergestellt werden und auch im Hinblick auf die späteren Verpackungsgeschwindigkeiten viel zu niedrig, welche häufig ebenfalls mit Spezialmaschinen erreicht werden. Da es außerordentlich schwierig ist, die leichten und kleinen Formlinge nach ihrer Vereinzelung zu stapeln, zu entstapeln und zu etikettieren, treten auch unvermeidbare Verluste durch Beschädigungen auf, die bei den hohen Stückzahlen wirtschaftlich ins Gewicht fallen.

Das oben Gesagte trifft auch auf den Verfahrensschritt des Bedruckens der Formlinge zu. Bei den angesprochenen Formlingen ist zu berücksichtigen, daß sie über nicht ebene Flächen verfügen, die bedruckt werden müssen, was mit normalen Rotationsdruckmaschinen nicht möglich ist.

Der Erfindung liegt daher die Aufgabe zugrunde, die Etikettierung bzw. das Bedrucken der beschriebenen Kunststofformlinge zu beschleunigen und die dazu erforderliche Bearbeitung der Kunststofformlinge zu vereinfachen.

Diese Aufgabe löst die Erfindung mit den Merkmalen des Anspruchs 1. Zweckmäßige Ausführungsformen der Erfindung sind Gegenstand der weiteren Ansprüche.

Dadurch, daß in dem erfindungsgemäßen Verfahren das Etikettieren bzw. das Bedrucken während des Zwischentaktes erfolgt, ist es möglich, die Produktionslinie mit der üblichen hohen Produktionsgeschwindigkeit weiter zu betreiben und die fertig etikettieren bzw. bedruckten Kunststofformlinge nach dem Stanzen zu erhalten. Das beruht einerseits darauf, daß entgegen der bisherigen Überzeugung die während des Zwischentaktes durch Wärmeabgabe eintretende Schrumpfung der ausgeformten Formlinge die Befestigung und die Haftung der angeklebten Etiketten nicht stört, jedenfalls dann nicht, wenn man den Klebstoff auf einer verhältnismäßig geringen Fläche aufbringt. Andererseits werden gemäß der Erfindung in den Intervallen die bewegungsfreien Zeiträume ausgenutzt, um die Etiketten mit dem Klebstoff auf den Formlingen anzupressen. Wenn anstelle des Etikettierens die Formlinge bedruckt werden sollen, schlägt Anspruch 1 hierfür ein Druckverfahren vor, welches ein Verfahren ist, das sich zum Bedrucken von gekrümmten Flächen eignet. Dadurch, daß das Etikettieren bzw. das Bedrucken in den Produktionsprozeß eingebaut ist, ergibt sich eine wesentliche Steigerung der Produktionsgeschwindigkeit.

Das Verfahren kann in einer ersten Alternative so geführt werden, daß während des oder der Zwischentakte die zu etikettierenden Formlinge einer Matte gleichzeitig in einem ersten Intervall mit dem Klebstoff versehen und in einem anschließenden zweiten Intervall auf ihren Klebstoffauftrag die Etiketten gepreßt werden, wobei im ersten Intervall während des Klebstoffauftrages die im zweiten Intervall benötigten Etiketten aufgenommen und im zweiten Intervall während des Anklebens der Etiketten der Klebstoff für die Etiketten der folgenden Matte aufgenommen wird. Das geschieht gleichzeitig über die gesamte Matte und damit mit der die Etikettierung aller in einer Matte zusammengefaßten Formlinge ausreichenden Anzahl von Etiketten und Leimaufträgen. Dadurch ist es trotz hoher Produktionsgeschwindigkeiten möglich, Fehler durch unzureichende Klebstoffaufträge oder falsch orientierte Etiketten zu vermeiden.

Unter üblichen Verhältnissen führt eine Produktionslinie der eingangs beschriebenen grundsätzlichen Art z.B. 33 Takte/min aus. Sofern man wie erfindungsgemäß möglich nur einen Zwischentakt für das Etikettieren vorsieht, braucht man die Produktionsgeschwindigkeit der Linie nicht herabzusetzen, die diese bislang schon hat. Das Verfahren gemäß Anspruch 2 hat daher den Vorteil, daß die Produktionsgeschwindigkeit bei der Herstellung der Kunststofformlinge nicht unter das übliche Maß herabgedrückt wird. Dafür aber entfällt jegliche Nachbearbeitung für das Etikettieren. Vielmehr liefern die nach der Erfindung arbeitenden Produktionslinien nunmehr die fertig etikettierten Formlinge, die deswegen am Ende der Produktionslinie gestapelt oder abgesackt und in der Verpackung weiterverwendet werden können.

Um die Produktionsgeschwindigkeit verdoppeln zu können, wird in Anspruch 3 eine zweite Alternative des Etikettierverfahrens dargestellt. Diese zweite Alternative besteht darin, daß während des oder der Zwischentakte eine der Anzahl der eine Matte bildenden Formlinge entsprechende Anzahl an Etiketten aus ersten Abgabeschächten entnommen wird und gleichzeitig eine gleich große Anzahl an Etiketten, die auf dem Weg von zweiten Abgabeschächten zur Matte mit Klebstoff versehen werden, auf die Formlinge gepreßt wird, wonach eine neue Matte aus Formlingen mit den aus den ersten Abgabeschächten entnommenen und zwischenzeitlich mit Klebstoff versehenen Etiketten beklebt werden, während aus den zweiten Abgabeschächten wieder Etiketten entnommen werden.

Bei diesem Verfahren tritt keine störende Unterbrechung dadurch ein, daß wie beim Verfahren gemäß der ersten Alternative entweder die Etiketten mit Klebstoff versehen werden können oder die Etiketten angeklebt werden. Die Klebstoffversorgung bildet bei dem Verfahren der zweiten Alternative keinen eigenen Verfahrenstrakt. Während auf der einen Seite des Produktionsbandes Etiketten entnommen werden, werden gleichzeitig bereits mit Klebstoff versehene Etiketten auf die dafür vorgesehenen Formlinge geklebt. Ist der Klebevorgang beendet, werden die aufgenommen Etiketten zu den noch unbeklebten Formlingen verfahren, während gleichzeitig von der anderen Seite des Produktionsbandes neue Etiketten gegriffen werden. Das ergibt einen stetigen Wechsel von Etikettenaufnahme und Klebevorgang. Auf dem Wege von der Aufnahme zu den Formlingen werden die Etiketten mit Klebstoff versehen.

Beide Verfahrensalternativen stimmen darin überein, daß gemäß Anspruch 4 bei den Formlingen einer Matte in der horizontal orientierten Folienbahn der Klebstoffauftrag und die Etikettzuführung von oben erfolgen.

Die Folienbahn, aus der die Formlinge gewonnen werden, besitzt eine erhebliche Flexibilität, welche nicht genügend Widerstand für das Ankleben von Objekten aufbringt. Die Erfindung vermag jedoch die durch die Ausformung von Bechern, Schalen oder ähnlichen Formlingen in den Matten entstehende und im Vergleich mit dem Ausgangszustand der Folienbahn erhöhte Formsteifigkeit auszunutzen, weil sie das Etikettieren im Anschluß an das Ausformen und vor dem Ausstanzen bzw. Vereinzeln der Formlinge vornimmt. Deswegen ist es möglich, das erfindungsgemäße Verfahren mit den Merkmalen des Patentanspruches 4 einwandfrei zu beherrschen. Diese Ausführungsform der Erfindung hat den Vorteil, daß sie das Aufnehmen der Etiketten trotz des außerordentlich geringen Gewichtes von Papierausschnitten, die als Einlagen oder Etiketten verwendet werden, erleichtert, wobei die Etiketten in einem Stapel untergebracht sind. Bei der maschinentechnischem Verwirklichung der Erfindung bietet diese Ausführungsform außerdem den Vorteil, daß die notwendige Baugruppe in den bislang unausgenutzten freien Raum unter bzw. neben der Matte angebracht werden kann, über dem sich die Matte wuahrend des Zwischentaktes befindet.

Diese Ausnutung eines bislang nicht oder nur unzulänglich verwendbaren Raumes, welcher in bestehenden Fertigungslinien zwischen der Warmverformungseinrichtung und der Produktionstechnik dieser nachgeschalteten Stanze besteht, hat bei Verwirklichung des erfindungsgemäßen Verfahrens eine Grundfläche, die der Fläche einer, maximal zweier aufeinanderfolgender Matten entspricht und wird an den gegenüberliegenden Seiten von Maschinen begrenzt. Deswegen bietet die Verwirklichung der Merkmale des Patentanspruchs 5 den erheblichen Vorteil, daß die Magazine für die Etiketten und die Vorrichtung zur Bereithaltung und zum Auftrag eines flüssigen oder sprühfähigen Leimes neben der Verpackungslinie untergebracht werden können, so das diese Vorrichtungen keine baulichen Veränderungen der bestehenden Fertigungslinie bedingen. Die Erfindung hat daher auch den Vorteil, daß sie nachträglich in vorhandene Fertigungslinien eingebaut werden kann, ohne daß die hierfür erforderlichen Bauteile und Baugruppen von der rämlichen Anordnung der bereits stehenden Bearbeitungsmaschinen abhängen.

Wie bereits oben angedeutet, ist das erfindungsgemäße Verfahren auch geeignet, die Formlinge zu bedrucken. Dazu wird vorgeschlagen, daß die in einer Matte zusammengefaßten Formlinge mit Hilfe eines Druckverfahrens bedruckt werden, während gleichzeitig ein Satz zweiter Stempel mit der Druckfarbe versehen werden. Werden diese Stempel in einem nachfolgenden Takt auf noch unbedruckte Formlinge gedrückt, wird der zur Seite gefahrene erste Satz Stempel mit Druckfarbe versehen.

Eine Vorrichtung zur Durchführung des Verfahrens erster Alternative gibt der Anspruch 7, nach dem die Vorrichtung gekennzeichnet, ist durch einen vor einer Stanze in Folienbewegungsrichtung angeordneten Maschinenständer mit einem Antrieb und einer Führung für einen Werkzeugschlitten, auf dem ein heb-und senkbarer Ausleger angeordnet ist, der auf einer Seite Werkzeuge zum Aufnehmen und zum Auftragen von Klebstoff, auf der anderen Seite Werkzeuge zur Aufnahme und zum Andruck von Etiketten trägt, wobei der Schlitten intervallweise aus einer Stellung, in der sich die Klebstoffwerkzeuge hinter der Stanze und die Etikettierwerkzeuge daneben unter einem Etikettiermagazin befinden, in eine Stellung und umgekehrt beweglich ist, in der die Etikettierwerkzeuge hinter der Stanze und die Klebstoffwerkzeuge unter einer Beleimungsvorrichtung stehen, und wobei die Hebebewegungen des Schlittens zum Beleimen der Werkzeuge und der Formlinge, sowie zur Entnahme der Etiketten aus dem Etikettenmagazin, sowie zum Anpressen der Etiketten an die beleimten Formlinge dienen, während jeder Bewegung des Schlittens in eine seiner Endstellungen eine Senkbewegung vorausgeht. Dabei ist gemäß Anspruch 8 vorgesehen, daß die Beleimungswerkzeuge Tupfer aufweisen, die zum Beleimen Klebstoffausträge der Beleimungsvorrichtung öffnen und den Leimauftrag auf den Formlingen bewirken.

Eine Vorrichtung zur Durchführung des Verfahrens zweiter Alternative ist in Anspruch 9 offenbart, nachdem vor einer Stanze in Folienbewegungsrichtung ein Maschinenständer angeordnet ist mit einem Antrieb und einer Führung für einen Werkzeugschlitten, auf dem zwei heb-und senkbare Ausleger angeordnet sind, deren Verbindungslinie in einer horizontalen Ebene senkrecht zur Folienbewegungsrichtung liegt, und die beide Werkzeuge zum Aufnehmen und zum Andruck von Etiketten tragen, wobei das eine Werkzeug aus einem in Folienrichtung links und das andere aus einem rechts von der Folienbahn angeordneten Etikettenmagazin versorgbar ist, und daß an den Etikettenmagazinen in Richtung auf die Folienbahn Düsen zum Ausbringen von Klebstoff angebracht sind, wobei sind Hebebewegungen des Schlittens zur Entnahme der Etiketten aus einem der beiden Magazine und zum gleichzeitigen Anpressen der beleimten Etiketten aus dem anderen Magazin an die Formlinge dienen, während jeder Bewegung des Schlittens in eine seiner Endstellungen eine Senkbewegung vorangeht.

Gemäß einem weiteren Unteranspruch ist bei beiden Verfahrensalternativen vorgesehen, daß die Etikettierwerkzeuge Saugköpfe zur Entnahme von Etiketten aus Schächten eines Etikettenmagazins und zum Anpressen der Etiketten an die Beleimung der Formlinge aufweisen.

Gemäß einem weiteren Anspruch werden die beklebten Formlinge einer Stanze zugeführt, dort ausgestanzt derart, daß die Formlinge noch über Stege miteinander verbunden sind, schließlich die Formlinge mit Hilfe einer Saugvorrichtung aus dem Verbund herausgelöst und auf einem absenkbaren Tisch abgelegt und von dort bei Erreichen einer vorbestimmten Stapelhöhe wegtransportiert werden. Die Saugelemente bilden dabei eine Matrix entsprechend der Formlingmatrix. Sie sind auf-und abbewegbar, sowie senkrecht zur Folienrichtung in Richtung auf den Stapeltisch, der nach jeder abgelegten Formlingslage um eine Formlingshöhe absenkbar ist.

Dabei wird beispielsweise die Stapelhöhe mit Hilfe einer Fotozelle kontrolliert.

Zur Durchführung der erfindungsgemäßen Verfahrensalternativen dienende Vorrichtungen werden im folgenden anhand von Ausführungsbeispiele beschrieben; es zeigen

Fig. 1 eine Seitenansicht einer Stanze zum Vereinzeln von Kunststofformlingen und der Vorrichtung gemäß der Erfindung (1. Alternative),

Fig. 2 eine Stirnansicht in Richtung des Pfeiles II der Fig. 1,

Fig. 3 einen Schnitt längs der Linie III-III der Fig. 2,

Fig. 4 eine Draufsicht auf einen Kunststofformling und eine Papiereinlage, mit der der Kunststofformling etikettiert wird,

Fig. 5 eine Stirnansicht einer erfindungsgemässen Vorrichtung zur Durchführung des Verfahrens zweiter Alternative und

Figur 6 Stirnansicht der Formlingstapelstation.

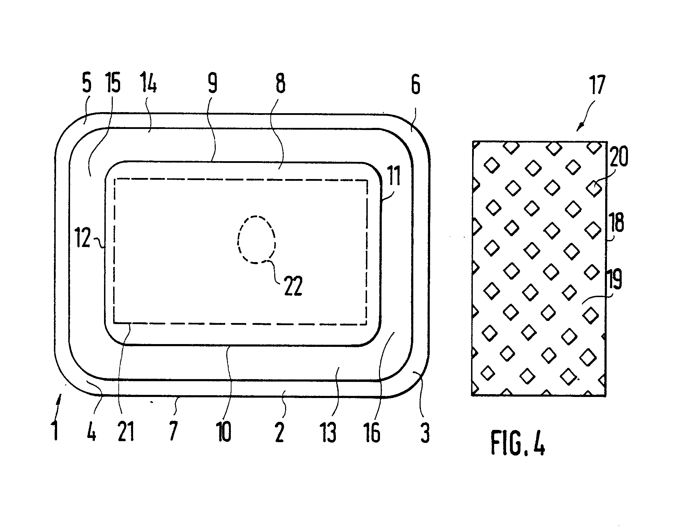

Das herzustellende und in Fig. 4 dargestellte Erzeugnis besteht aus einer Schale, welche einen oberen ebenen Rand (2) aufweist, der abegrundete Ecken (3 bis 6) besitzt. Die Außenkante (7) ist eine Schnittkante, welche in einer Stanze hergestellt wird, die den Kunststofformling aus einer Matte heraustrennt, in der er zusammen mit weiteren Formlingen zunächst eine Baueinheit bildet. Der Boden (8) des Formlings (1) hat zwei parallele längere Seiten (9 bzw. 10) und zwei dazu im wesentlichen rechtwinklig verlaufende kürzere Seiten (11 bzw. 12). Er ist eben und mit dem oberen Rand (2) durch nach oben divergierende Längswände (13 bzw. 14), sowie Querwände (15, 16) verbunden. Die beschriebenen Teile bilden in dem Formling (1) eine Baueinheit.

Ein Etikett (17) besteht aus mehreren Papierlagen. Seine Oberseite (18) ist glatt. Die Unterseite wird von einem saugfähigen Papierausschnitt (19) gebildet, der mit quadratischen Vertiefungen (20) versehen ist und daher eine hiervon unterbrochene Oberfläche aufweist. Die strichpunktierte Linie (21) gibt die richtige Stellung des mit dem Papierausschnitt (19) nach unten orientierten Etiketts (17) in der Schale wieder, die von dem Kunststofformling - (1) gebildet wird. Die gepunktete Linie (22) gibt die Begrenzung eines Klebstoffauftrages wieder. Mit diesem Klebstoff wird die mit Vertiefungen versehene Unterseite des Etiketts (17) mit der Oberseite des Bodens (8) der Schale verbunden.

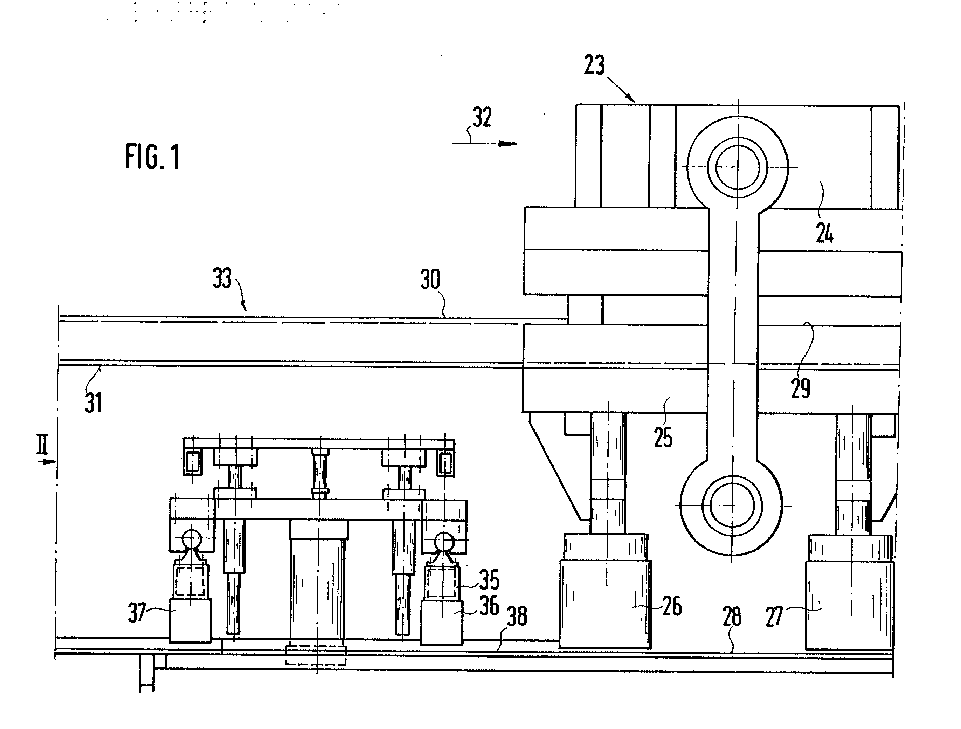

In der Darstellung der Figur 1 ist eine Stanze - (23) wiedergegeben, deren Oberteil (24) senkrecht gegenüber dem feststehenden Unterteil (25) beweglich ist. Das Unterteil ruht auf einem Maschinenständer (26, 27), welcher auf dem Boden - (28) einer Halle stationär, jedoch verschiebliche angeordnet ist. Das Unterteil (25) bildet einen Tisch, dessen Oberseite (29) die Ebene (30) einer Folie darstellt, aus der fertig geformte und erhärtete Kunststofformlinge ausgestanzt werden. Die Unterseite (31) der Folie ist daher von der Oberseite nach unten versetzt und durch eine Linie gekennzeichnet, welche die Ebene wiedergibt, in der sich die Innenseiten der Böden (8) der Formlinge (1) befinden, wenn diese mattenweise durch die Stanze (23) taktweise geführt werden.

Die Folienrichtung ist durch den Pfeil (32) gekennzeichnet. In dieser Richtung befindet sich vor der Stanze (23) die allgemein mit (33) bezeichnete Vorrichtung zur Durchführung des erfindungsgemäßen Verfahrens gemäß erster Alternative. Sie steht damit unter einer Matte, die im Zwischentakt der im übrigen nicht dargestellten Fertigungslinie nachkühlt, nachdem die in der Matte befindlichen Formlinge (1) aus der Folie nach unten durch Tiefziehen oder Druckluftverfharen herausgeformt worden sind.

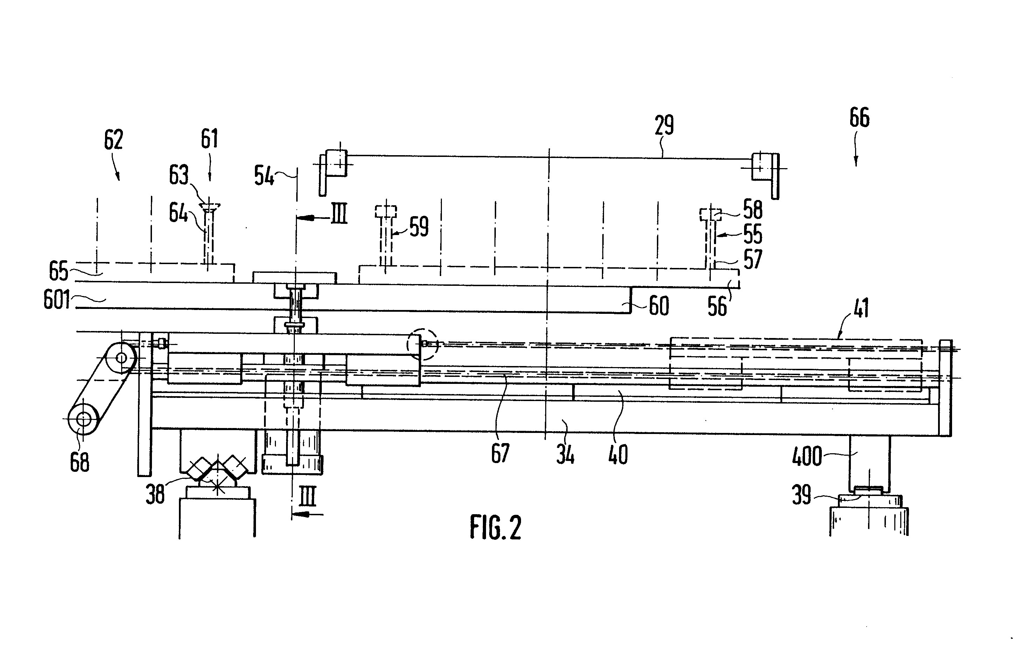

Gemäß der Darstellung der Figuren 1 und 2 hat die erfindungsgemäße Vorrichtung einen Maschinenständer (34), welcher von einem Rahmen - (33) gebildet wird, der mit je zwei Doppelkufen (36, 37) auf je einer Schiene (38) bzw. einer Führungsschiene (39) mit entsprechenden Kufen (39') ruht. Die Schienen (38 und 39) verlaufen parallel zur Folienlaufrichtung (32). Der Maschinenständer (26, 27) der Stanze (23) ist ebenfalls in Folienlaufrichtung beweglich. Eine nicht dargestellte Kupplung hält den Maschinenständer (34) der Vorrichtung - (33) in einem vorgegebenen Abstand von der Stanze (23). Die Beweglichkeit der Stanze (23) in Folienlaufrichtung ermöglicht es, mit Hilfe einer Steuerung die Stanzwerkzeuge exakt auf die Ränder (7) der Formlinge (1) in der Matte auszurichten. Dabei muß berücksichtigt werden, daß im Betrieb der Fertigungslinie die dazu erforderliche Stellung der Stanze (23) verändert werden muß. Das ergibt sich einerseits bei der Fertigung unterschiedlicher Formlinge (1) auf der gleichen Fertigungslinie, andererseits aber auch aus gewissen, unvermeidlichen Formveränderungen, die durch die Wärmebehandlung der Folienbahn auftreten. Eine entsprechende Änderung der Stellung der erfindungsgemäßen Vorrichtung (33) ist deswegen erforderlich. Mit Hilfe der Kupplung ist es möglich, während des Betriebes der Fertigungsstraße auftretende Änderungen der Stellung der Stanze (23) unmittelbar auf die Vorrichtung (33) zu übertragen und damit die Justierung dieser Vorrichtung mit der Stanze (23) vorzunehmen, weil bei Fertigung bestimmter Formlinge (1) der Abstand zwischen der Vorrichtung (33) und der Stanze (23) konstant ist. Die Korrektur des Folienverlaufs ist aber auch über eine nicht dargestellte Fotozellensteuerung bei feststehender Stanze möglich.

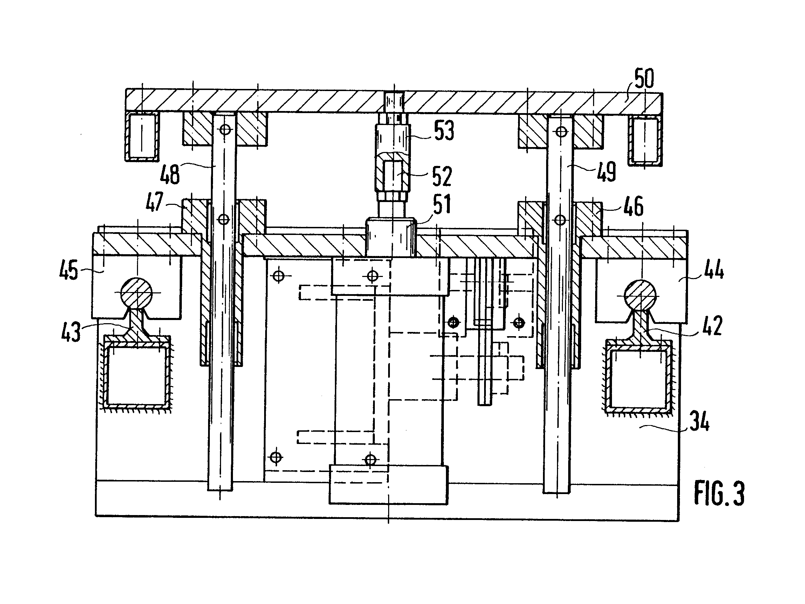

Auf dem Maschinenständer (34) ist das Bett - (40) eines in diesem geführten Werkzeugschlittens (41) untergebracht. Der Werkzeugschlitten hat zwei Endstellungen, von denen die rechte strichpunktiert und die linke in Figur 2 ausgezeichnet wiedergegeben ist. Einzelheiten des Werkzeugschlittens ergeben sich aus der Darstellung der Figur 3.

Danach trägt der Maschinenständer (34) zwei quer zur Folienlaufrichtung verlaufend Schienen - (42, 43), deren abgerundete Köpfe eine Zwangsführung für Kufen (44, 45) des Schlittens bilden. Auf dem Schlitten sind Führungsbuchsen (46, 47) für Führungsstangen (48, 49) befestigt, welche einen Ausleger (50) einer Heb-und Senkbewegung führen. Diese Bewegung wird von einem hydraulischen oder pneumatischen Zylinder (51) über dessen Kolbenstange (52) und einen Anschluß (53) an die Unterseite des Auslegers (50) herbeigeführt.

Die Mitte des Auslegers entspricht der Schnittebene der Figur 3 und ist in der Figur 2 mit (54) bezeichnet. Auf einer Seite trägt der Ausleger eine Mehrzahl von Klebewerkzeugen (55) auf einem Querträger (56). Ein solches Klebewerkzeug hat auf einem Stiel (57) einen Tupfer (58), mit dem ein Klebstoffauftrag gemäß der in Figur 4 wiedergegebenen Umrißlinie (22) aufgebracht werden kann. In der Darstellung der Figur 2 sind zwei Klebewerkzeuge (55, 59) der beschriebenen Art wiedergegeben. Die übrigen fünf gleichartigen Klebewerkzeuge sind lediglich mit ihren Mittellinien angedeutet.

Während der Werkzeugträger (56) auf dem einen Arm (60) des Auslegers (50) angeordnet ist, trägt der andere Arm (60) des Auslegers (50) Etikettierwerkzeuge (61) in der gleichen Anzahl wie die Klebewerkzeuge (58, 59). Ein solches Etikettierwerkzeug besteht aus einem Saugkopf (63), durch den ein Unterdruck an ein Etikett angelegt werden kann, das sich in einem Schacht eines auf der Seite (62) befindlichen Magazins befindet, aber nicht dargestellte ist. Dieser Saugkopf (63) sitzt auf einem Stiel (64), durch den das Vakuum angelegt wird und der seinerseits auf einem Träger (65) untergebracht ist, den der Arm (60) unterstützt.

Nicht dargestellt ist in Figur 2 auch ein bei - (66) stationär eingebauter Klebstoffvorratsbehälter. Dieser weist eine der Anzahl der Klebewerkzeuge - (55, 59) entsprechende Anzahl von Entnahmestellen auf, die mit ihren Tupfern (58) geöffnet werden können und dann eine entsprechende Klebstoffmenge freigeben.

Die vorstehend beschriebene Vorrichtung arbeitet wie folgt: Aus der von einem Wickel abgezogenen Folienbahn werden vor der Vorrichtung (33) nach entsprechender mattenweiser Erhitzung in der nicht dargestellten Tiefziehmaschine Formlinge (1) hergestellt. Die Matte weist in Querrichtung sieben Formlinge auf, in Längsrichtung können mehrere Reihen von sieben Formlingen in der Matte vorgesehen sein. Das ist jedoch für die nachstehend beschriebene Arbeitsweise der Maschine unerheblich und wird daher im einzelnen nicht erörtert.

Die Fertigungslinie arbeitet taktweise. Sie hat einen Zwischentakt, in der eine Matte sich in der richtigen Stellung über der Vorrichtung (33) befindet, während die vorher geformte Matte in der Stanze (23) liegt. Während des Zwischentaktes erfolgt das Etikettieren in der folgenden Weise:

Zunächst fährt der Schlitten in dem Bett (40) in die in Figur 2 ausgezogen wiedergegebene Stellung. Während des Stillstandes der Matte wird mit Hilfe des Zylinders (51) der Ausleger (50) angehoben, wodurch die vorher mit Leim versehenen Tupfer (58) der Werkzeuge (55, 59) die aus der Figur ersichtlichen Leimaufträge auf jeden Formling (1) der Matte auftragen. Dies geschieht während eines ersten Intervalls. In diesem Intervall entnehmen nach der Aufwärtsbewegung des Auslegers (50) die Saugköpfe (63) der Etikettierwerkzeuge (61) ein Etikett (17) aus den Schächten des Etikettiermagazins bei (62). Am Ende des Intervalls ist die Kolbenstange eingefahren, so daß die Tupfer (58, 59) von den Formlingen (1) gelöst sind. Im folgenden Intervall wird der Werkzeugschlitten (41) mit Hilfe zweier paralleler Rollenketten (67) über einen Antrieb (68) aus der in ausgezogenen Linien wiedergegebenen linken Stellung der Figur 2 in die strichpunktierte Stellung verschoben. Durch gelangen die auf den Saugköpfen (63) befindlichen Etiketten in die richtige Stellung unter den Formlingen (1). Durch Ausfahren der Kolbenstange (52) aus dem Zylinder (51) wird der Ausleger (50) so weit angehoben, daß die Saugköpfe (63) die Etiketten mit ihrer richtigen Seite gegen die Böden der Formlinge (1), d.h. den dort befindlichen Leimauftrag
pressen. Gleichzeitig werden die Tupfer (58, 59)
unter die Austräge der bei (66) zu denkenden
Beleimungsvorrichtung gebracht und mit Leim versehen. Danach wird der Ausleger (50) wieder abgesenkt, so daß die Saugköpfe (63) die Etiketten
freigeben, die auf den Böden der Formlinge (1)
haften.

Gleichzeitig ist der Zwischentakt beendet und
die Matte gelangt im folgenden Takt in die Stanze -
(23), in der die Formlinge (1) ausgeschnitten,
dadurch vereinzelt, im Anschluß daran gezählt und
abgesackt werden.

Abweichend von dem dargestellten
Ausführungsbeispiel kann jeder der beiden beschriebenen Intervalle einem Zwischentakt entsprechen, was aber im vorliegenden
Ausführungsbeispiel nicht vorgesehen ist.

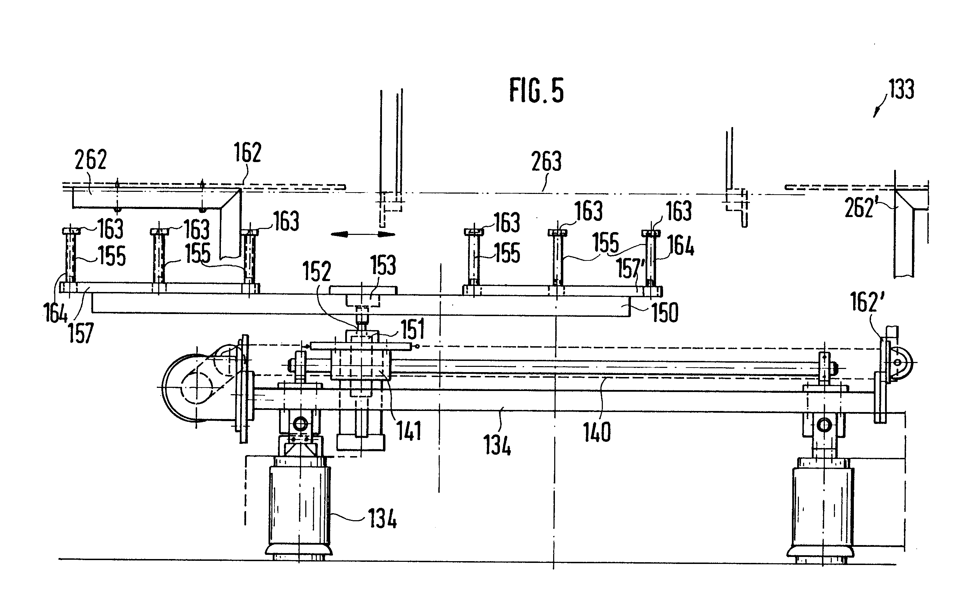

In der Figur 5 ist eine Vorrichtung (133) zur
Durchführung des Verfahrens gemäß zweiter Alternative dargestellt. Auch diese Vorrichtung (133)
besitzt einen Maschinenständer (134), der dem aus
Figur 2 bekannten im wesentlichen entspricht und
daher nicht detaillierter beschrieben wird. Auf dem
Maschinenständer (134) ist das Bett (140) eines in
diesem geführten Werkzeugschlittens (141) untergebracht. Der Werkzeugschlitten (141) hat zwei
Endstellungen, von denen die linke in Figur 5
gezeichnet ist. Die Einzelheiten des Werkzeugschlittens stimmen im wesentlichen mit den auf
Figur 3 hervorgehenden überein. Auch bei dem
Schlitten (141) sind aus der Figur 5 allerdings nicht
hervorgehende Führungsstangen befestigt, welche
einen Ausleger (150) bei einer Heb-und Senkbewegung führen. Diese Bewegung wird von einem
hydraulischen/pneumatischen Zylinder (151) über
dessen Kolbenstange (152) und einen Anschluß -
(153) an die Unterseite des Auslegers (150) herbeigeführt. Auf beiden Seiten des Auslegers (150)
sind eine Mehrzahl von Etikettierwerkzeugen (155)
auf je einem Querträger (157 und 157') angeordnet.
Diese Etikettierwerkzeuge (155) bestehen jeweils
aus einem Saugkopf (163), durch den ein Unterdruck an ein Etikett angelegt werden kann, das sich
in einem Schacht von bei (162 und 162') angedeuteten Magazinen befindet. Der Saugkopf (163) sitzt
auf einem Stiel (164), durch den das Vakuum angelegt wird und der seinerseits auf dem Träger (157,
157') untergebracht ist, den der Arm (160) unterstützt. Die lediglich gestrichelt dargestellten Magazine (162, 162') sind jeweils auf einem Rahmen -
(262 und 262') befestigt. An diesem Rahmen (262
und 262') sind nicht dargestellte Düsen angeordnet, die die aus den Magazinen (162, 162') angesaugten Etiketten mit Klebstoff besprühen, während
sie mit Hilfe des Werkzeugschlittens (141) in die bei (263) dargestellte Folienebene verfahren werden.

Die vorstehend beschriebene Vorrichtung arbeitet wie folgt: Aus der von einem Wickel abgezogenen Folienbahn werden vor der Vorrichtung -
(133) nach entsprechender mattenweiser Erhitzung
in der nicht dargestellten Tiefziehmaschine Formlinge (1) hergestellt. Die Fertigungslinie arbeitet
taktweise. Sie hat einen Zwischentakt, in der eine
Matte sich in der richtigen Stellung über der Vorrichtung (133) befindet, während die vorher
geformte Matte in der Stanze (23) liegt. Während
des Zwischentaktes erfolgt das Etikettieren auf folgenden Weise: Zunächst fährt der Schlitten (141)
in die in Figur 5 dargestellte Stellung. Während
des Stillstandes der Matte wird mit Hilfe des Zylinders (151) der Ausleger (150) angehoben, wodurch
die Etikettierwerkzeuge (155), die links auf dem
Ausleger (150) angeordnet sind, unter die Schächte
des Etikettiermagazins (162) gelangen. Die
Saugköpfe (163) entnehmen dem Magazin (162)
die nötigen Etiketten. Gleichzeitig pressen die Etikettierwerkzeuge (155), die rechts auf dem Auslger
(150) angeordnet sind, aus dem Magazin (162')
entnommene und unterwegs mit Klebstoff besprühte Etiketten auf die Formlinge der bereitstehenden Matte. Dann fährt die Kolbenstange (152)
in den Zylinder (151) ein. Gleichzeitig wird die
etikettierte Matte in die Stanze (23) gefahren. Der
Werkzeugschlitten (141) wird in die entgegengesetzte Stellung verfahren, so daß die Etikettierwerzeuge (155), die rechts auf dem Ausleger (150)
angeordnet sind, unter den Schächten des Etikettiermagazins (162') stehen. Die Kolbenstange -
(152) fährt nach oben. Jetzt werden aus dem Magazin (162') neue Etiketten fur die nachfolgende
Matte angesaugt, während die Etikettierwerkzeuge
(155), die links auf dem Ausleger (150) angeordnet
sind, die zuvor angesaugten Etiketten aus dem
Magazin (162), die unterwegs ebenfalls mit Klebstoff besprüht wurden, auf die Formlinge der bereitstehenden Matte pressen. Sodann wird die etikettierte Matte in die Stanze (23) gefahren. Auf
diese Weise wird im Vergleich zum Verfahren
gemäß Alternative 1 die Produktionsgeschwindigkeit verdoppelt, da bei jeder Senkbewegung des Auslegers (150) eine neue Matte in
Bereitschaftsstellung geht.

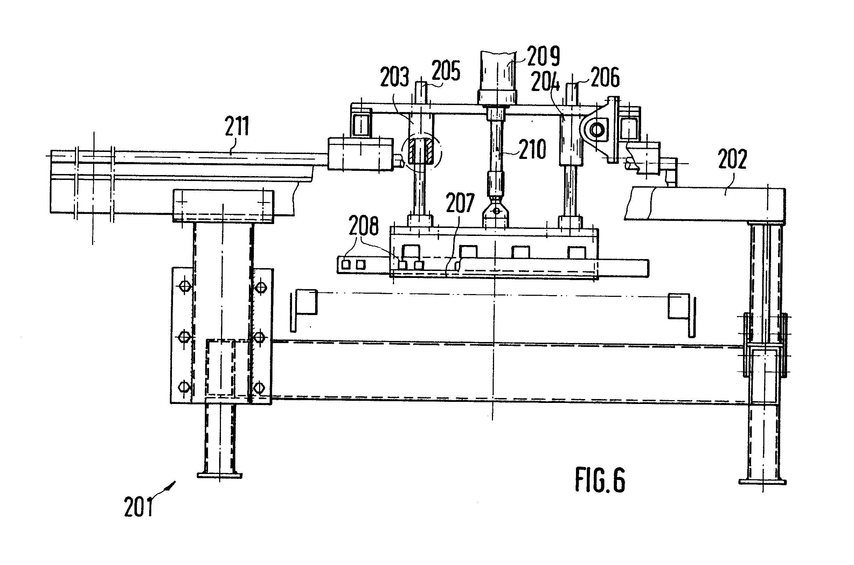

In der Stanze (23) werden die Formlinge aus
der Matte herausgestanzt, jedoch so, daß noch
Stege verbleiben, die den Verbund der Formlinge
aufrechterhalten. In diesem Zustand wird die Matte
weitertransportiert und gelangt in die Stapelstation -
(201), die in Figur 6 dargestellt ist. Sie besteht im
wesentlichen aus einem brückenartig über die
Folienbahn gebauten Ständer (202), an dem über
der Folienebene Führungsbuchsen (203 und 204)
in vertikaler Richtung angeordnet sind, in denen Führungsstangen (205 und 206) laufen, die an einen Rahmen (207) angreifen, der eine der Anordnung und Anzahl der in der Matte enthaltenen Formlinge entsprechende Matrix von Saugköpfen (208) enthält. Der Rahmen (207) kann mit Hilfe eines Druckmittelzylinders (209), dessen Kolbenstange (210) am Rahmen (207) befestigt ist, in vertikaler Richtung bewegt werden. Der Zylinder (209) mit dem Rahmen (207) ist auf Schienen (211) verfahrbar und zwar senkrecht zur Folienrichtung. Die Schienen (211) reichen seitlich über den Ständer (202) hinaus, so daß der Rahmen (207) senkrecht über einen neben dem Ständer (202) angeordneten Hubtisch verfahren werden kann. Der Hubtisch ist nicht dargestellt. Er ist jedoch so ausgestaltet, daß nach jeder Ablage von Formlingen auf demselben dieser um Formlingsstärke abgesenkt wird. Dabei kann eine Fotozelle das gleichbleibende Ablageniveau überwachen. Eine Zählvorrichtung oder eine vergleichbare Anordnung erzeugt nach festgelegter Stapelhöhe einen Impuls, der z.B. ein die Hubtischfläche bildendes Transportband in Bewegung setzt, welches den Stapel abtransportiert. Bevor die Formlinge jedoch zum Hubtisch gelangen, werden sie von den Saugköpfen (208) angesaugt und aus dem Mattenverband herausgebrochen. Der Rahmen (207) wird mit Hilfe der einfahrenden Kolbenstange (210) des Zylinders (209) nach oben gefahren. Dann werden Zylinder (209) und Rahmen (207) in die Stellung über den Hubtisch verfahren. Dort lösen sich die Formlinge von den Saugköpfen (208) und gelangen auf die Hubtischfläche. Der Zylinder (209) samt Rahmen (207) wird dann wieder über die nächst Matte gefahren.

**Ansprüche**

1. Verfahren zur Herstellung von etikettierten und/oder bedruckten Kunststofformlingen, z.B. von Kunststoffschalen aus einer Kunststoffolienbahn, wobei die Formlinge taktweise aus der aufgeheizten Kunststoffolie zu mehreren gleichzeitig in einer Matte während eines Taktes ausgeformt, die Matten während wenigstens eines Zwischentaktes abgekühlt und die Formlinge in weiteren anschließenden Takten aus der Matte gewonnen werden,

**dadurch gekennzeichnet,**

daß während des oder der Zwischentakte die Formlinge (1) mit den Etiketten (17) versehen und/oder mittels eines Verfahrens zum Bedrucken von gekrümmten Flächen, bedruckt werden.

2. Verfahren zur Herstellung von etikettierten Kunststofformlingen, z.B. von Kunststoffschalen aus einer Kunststoffolienbahn, vorzugsweise mit aus Papier bestehenden Etiketten und einem zur Befestigung der Etiketten auf der Kunststoffolie dienenden Klebstoff, wobei die Formlinge taktweise aus der aufgeheizten Kunststoffolie zu mehreren gleichzeitig in einer Matte während eines Taktes ausgeformt, die Matten während wenigstens eines weiteren Zwischentaktes abgekühlt und die Formlinge in weiteren anschließenden Takten aus den Matten gewonnen werden,

**dadurch gekennzeichnet,**

daß während des oder der Zwischentakte die zu etikettierenden Formlinge (1) einer Matte gleichzeitig in einem ersten Intervall mit dem Klebstoff versehen und in einem anschließenden zweiten Intervall auf ihren Klebstoffauftrag die Etiketten (17) gepreßt werden, wobei im ersten Intervall während des Klebstoffauftrages die im zweiten Intervall benötigten Etiketten (17) aufgenommen und im zweiten Intervall während des Anklebens der Etiketten (17) der Klebstoff für die Etiketten (17) der folgenden Matte aufgenommen wird.

3. Verfahren nach Anspruch 1 zur Herstellung von etikettierten Kunststofformlingen, z.B. von Kunststoffschalen aus einer Kunststoffolienbahn, vorzugsweise mit aus Zellulose/Pergament bestehenden Etiketten und einem zur Befestigung der Etiketten auf der Kunststoffolie dienenden Klebstoff, wobei die Formlinge taktweise aus der aufgeheizten Kunststoffolie zu mehreren gleichzeitig in einer Matte während eines Taktes ausgeformt, die Matten während wenigstens eines Zwischentaktes abgekühlt und die Formlinge in weiteren anschließenden Takten aus den Matten gewonnen werden,

**dadurch gekennzeichnet,**

daß während des oder der Zwischentakte eine der Anzahl der eine Matte bildenden Formlinge (1) entsprechende Anzahl an Etiketten (17) aus einem ersten Etikettenmagazin (162) entnommen wird und gleichzeitig eine gleich große Anzahl an Etiketten (17), die auf dem Weg von einem zweiten Etikettenmagazin (162') mit Klebstoff versehen werden, auf die Formlinge (1) gepreßt werden, wonach eine neue Matte aus Formlingen (1) mit den aus dem ersten Etikettenmagazin (162) entnommenen und zwischenzeitlich mit Klebstoff versehenen Etiketten (17) beklebt werden, während aus dem zweiten Etikettenmagazin (162') wieder Etiketten (17) entnommen werden.

4. Verfahren nach einem oder mehreren der Ansprüche 1 bis 3, dadurch gekennzeichnet, daß bei den Formlingen (1) einer Matte in der horizontal orientierten Folienbahn der Klebstoffauftrag und die Etikettzuführung von oben erfolgen.

5. Verfahren nach einem der Ansprüche 1 bis 4, dadurch gekennzeichnet, daß die Etiketten (17) und der Klebstoff nach der Entnahme bis zum Anpressen bzw. Auftragen und danach bis zur erneuten Aufnahme quer zur Folienbahn gleichzeitig und in gleicher Richtung bewegt werden.

6. Verfahren nach einem der Ansprüche 1 bis 5, dadurch gekennzeichnet, daß nach der Etikettierung der Formlinge die beklebten Formlinge (1) einer Stanze (23) zugeführt werden, dort ausgestanzt werden derart, daß die Formlinge noch über Stege miteinander verbunden sind, schließlich die Formlinge (1) mit Hilfe eine Saugvorrichtung (208) aus dem Verband herausgelöst und auf einem absenkbaren Hubtisch abgelegt und von dort bei Erreichen einer vorbestimmten Stapelhöhe wegtransportiert werden.

7. Vorrichtung zur Durchführung des Verfahrens nach einem der Ansprüche 1, 2, 4 bis 6, gekennzeichnet durch einen vor einer Stanze (23) in Folienbewegungsrichtung (32) angeordneten Maschinenständer (34) mit einem Antrieb (68) und einer Führung (40) für einen Werkzeugschlitten - (41), auf den ein heb-und senkbarer Ausleger (50) angeordnet ist, der auf einer Seite (60) Werkzeuge (55, 59) zum Aufnehmen und zum Auftragen von Klebstoff und auf der anderen Seite (601) Werkzeuge (61) zur Aufnahme und zum Andruck von Etiketten (17) trägt, wobei der Schlitten (41) intervallweise aus einer Stellung, in der sich die Klebstoffwerkzeuge (55, 59) hinter der Stanze (23) und die Etikettierwerkzeuge (61) daneben unter einem Etikettiermagazin (62) befinden, in eine Stellung und umgekehrt beweglich ist, in der die Etikettierwerkzeuge (61) hinter der Stanze (23) und die Klebstoffwerkzeuge (58, 59) unter einer Beleimungsvorrichtung (66) stehen, und wobei die Hebebewegungen des Schlittens (41) zum Beleimen der Werkzeuge (55, 59) und der Formlinge, sowie zur Entnahme der Etiketten (17) aus dem Etikettenmagazin (62), sowie zum Anpressen der Etiketten (17) an die beleimten Formlinge (1) dienen, während jeder Bewegung des Schlittens (41) in eine seiner Endstellungen eine Senkbewegung vorausgeht.

8. Vorrichtung nach Anspruch 7, dadurch gekennzeichnet, daß die Beleimungswerkzeuge (55, 59) Tupfer (58) aufweisen, die zum Beleimen Klebstoffausträge der Beleimungsvorrichtung (66) öffnen und den Leimauftrag auf den Formlingen - (1) bewirken.

9. Vorrichtung zur Durchführung des Verfahrens gekennzeichnet durch einen vor einer Stanze - (23) in Folienbewegungsrichtung (32) angeordneten Maschinenständer (134) mit einem Antrieb (168) und einer Führung (140) für einen Werkzeugschlitten (141), auf dem ein heb-und senkbarer Ausleger (150) angeordnet ist, an dessen beiden Enden Querträger (157, 157') ange ordnet sind, an denen jeweils die gleiche Anzahl von Etikettierwerkzeugen (155) zum Aufnehmen und zum Andrücken von Etiketten (17) befestigt sind, wobei die eine Gruppe von Werkzeugen (155) aus einem in Folienrichtung links und die andere Werkzeuggruppe aus einem rechts von der Folienbahn angeordneten Etikettenmagazin (162, 162') versorgbar ist, und daß an den Etikettenmagazinen (162, 162') in Richtung auf die Folienbahn Düsen zum Ausbringen von Klebstoff angebracht sind und wobei die Hebebewegung des Schlittens (141) zur Entnahme der Etiketten (17) aus einem der beiden Magazine (162, 162') und zum gleichzeitigen Anpressen der beleimten Etiketten (17) aus dem jeweils anderen Magazin (162, 162') an die Formlinge (1) dienen, während, jeder Bewegung des Schlittens (141) in eine seiner Endstellungen eine Senkbewegung vorausgeht.

10. Vorrichtung nach einem oder mehreren der Ansprüche 7 bis 9, dadurch gekennzeichnet, daß die Etikettierwerkzeuge (61, 155) Saugköpfe (163) zur Entnahme von Etiketten (17) aus Schächten eines Etikettenmagazins (62, 162, 162') und zum Anpressen der Etiketten (17) an die Beleimung der Formlings (1) aufweisen.

11. Vorrichtung nach einem der Ansprüche 7 bis 10, dadurch gekennzeichnet, daß in Bewegungsrichtung der Folienbahn hinter dem Maschinenständer (34, 134) eine Stanze (23) und hinter der Stanze (23) eine Saugvorrichtung (207, 208) mit einer Matrix von Saugelementen (208) angeordnet ist, die vertikal auf und ab und senkrecht zur Folienrichtung bewegbar ist in Richtung auf einen Hubtisch, der nach jeder abgelegten Formlingslage um eine Formlingsstärke absenkbar ist.

12. Vorrichtung zur Durchführung des Verfahrens nach Anspruch 1, gekennzeichnet durch einen vor einer Stanze (23) in Folienbewegungsrichtung angeordneten Maschinenständer (34, 134) mit einem Antrieb (168) und einer Führung (140) für einen Werkzeugschlitten (141), auf dem ein heb-und senkbarer Ausleger (150) angeordnet ist, an dessen beiden Enden Stempel zum Bedrucken der Formlinge (1) befestigt sind, wobei die eine Gruppe von Stempeln aus einem in Folienrichtung links und die andere Stempelgruppe aus einem rechts von der Folienbahn angeordneten Druckfarbenbehälter versorgbar ist, wobei die Hebebewegung des Schlittens (141) der Einfärbung der Stempel aus einem der beiden Druckfarbenbehälter und zum gleichzeitigen Bedrucken der Formlinge (1) mit Hilfe der vom anderen Druckfarbenbehälter eingefärbtem Stempel dient, der während jeder Bewegung des Schlittens (141) in eine seiner Endstellungen eine Senkbewegung vorausgeht.

FIG.1

FIG.2

FIG.3

0 220 377

FIG. 4

FIG.5

262   162                          263                              133

163   163   163                    163   163   163
155   155                          155   155   157'  164

152   153                                          162'
164                                                150
157   151
                                                   162'

141        134        140

134

FIG.6

201  211  203  205  209  204  206  210  207  208  202

0 220 377